# EUROPEAN PATENT SPECIFICATION

(11) **EP 0 296 710 B1**
(45) Date of publication and mention of the grant of the patent: **23.02.1994**
(21) Application number: 88304445.5
(22) Date of filing: 17.05.1988
(51) Int. Cl.: G02B 27/00, G02F 1/13

(54) **Head-up display combiner utilizing a cholesteric liquid crystal element**
Überlagerungsvorrichtung für ein Sichtinstrument mit einem cholesterischen Flüssigkristallelement
Système combineur de visualisation tête-haute utilisant un élément à crystal liquide cholestérique

(30) Priority: 23.06.1987 US 65487
(43) Date of publication of application: 28.12.1988
(73) Proprietor: KAISER AEROSPACE AND ELECTRONICS CORPORATION, Oakland California 94612 (US)
(72) Inventor: Berman, Arthur Louis, Milpitas California 95035 (US)
(74) Representative: Huntingford, David Ian

(56) References cited:
- EP-A- 0 154 953
- GB-A- 1 321 303
- GB-A- 1 529 227
- GB-A- 2 149 140
- US-A- 3 711 181
- ENGINEERING MATERIALS DESIGN, vol. 31, no. 4, April 1987, page 15, Sutton, Surrey, GB; "Holographic 'mirror' helps fighter pilots to see"
- IDEM

## Description

The present invention relates generally to the field of display systems for use in aircraft, flight simulators, and the like, and more particularly to a system which combines a generated image with an image in an observer's line-of-sight by projecting the generated image onto a cholesteric liquid crystal combiner which reflects the projected image toward the observer together with images in the line-of-sight of the observer passing through the combiner.

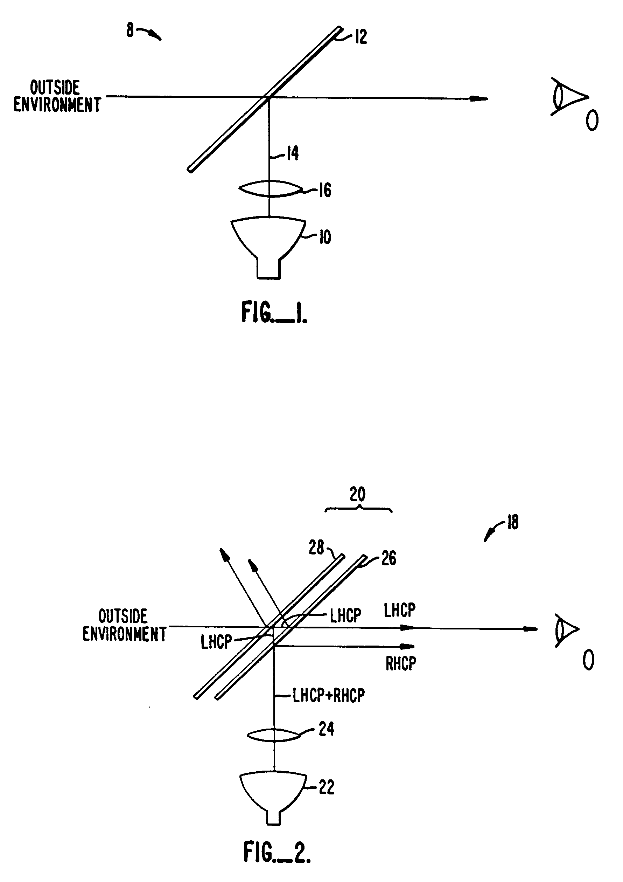

In aircraft and other vehicles which require nearly continuous attention to both the outside environment and to instrumentation such as control, ordinance, etc., simultaneous viewing of both is desired. To accomplish this simultaneous viewing of both the outside environment and the instrumentation, heads-up displays (hereafter referred to as HUDs) are utilized. Such a typical prior art HUD system 8 is shown in Fig. 1. Typically, HUD systems consist of an instrumentation image source 10, such as a cathode ray tube (CRT), liquid crystal display (LCD), or similar display, an image combiner 12, and optics 16 for collimating the image. The combiner is usually angled relative to the line-of-sight plane of the observer so that the projected image in the image source plane is reflected into the line-of-sight plane of the observer. The observer views the outside environment through the combiner together with the projected instrumentation image, which appears as a virtual image focussed at infinity. Thus, the instrumentation image is, in effect, superimposed on the observer's view of the outside environment.

Presently, combiners fit into one of two categories semi-reflective combiners, and holographic combiners. Semi-reflective combiners are generally composed of a body of light-transmissive material, such as glass, having flat or selectively curved faces, one such face (usually that facing the observer) being provided with a semi-reflective thin-film coating of aluminum, silver, etc.

Light incident on a semi-reflective combiner from one direction is transmitted through it, and light incident on the combiner from the opposite direction is reflected by it. However, both absolute transmission and reflection is not possible. That is, to facilitate transmission of images from the outside environment through the combiner some degree of reflectivity of the projected images by the combiner must be sacrificed, and vice-versa. For this reason, semi-reflective mirrors as combiners have relatively poor transmissivity of images from the outside environment, and low contrast of the projected images as against the images from the outside environment. Further, aluminum coatings oxidize, silver coatings tarnish, etc., so that transmissivity and reflectivity tend to decrease with age of the combiner, especially at the shorter wavelengths. A typical semi-reflective mirror combiner will, at best, transmit approximately 75% of the light from the outside environment, while reflecting approximately 25% of the light comprising the projected image to the observer.

Holographic combiners generally consist of, in addition to an image source, diffraction optics in varying complexity. The diffraction optics serve as a combiner, and typically include a layer of photosensitive organic material such as dichromated gelatin or photographic emulsion having a diffraction grating recorded thereon. This layer is sandwiched between two layers of glass which provide structural support and protect it from physical damage. Under the principal of Bragg diffraction, the diffraction grating will diffract and reflect light in a selected bandwidth, and transmit light outside the selected bandwidth.

In operation, the holographic combiner is placed in the line-of-sight view of an observer. All images from the outside environment in the line-of-sight of the observer, except for those at the diffraction/reflection wavelength, pass through the combiner. Those images at the diffraction/reflection wavelength are reflected away from the observer. A projected image at the diffraction/reflection wavelength of the diffraction grating, incident upon the combiner, is reflected in the line-of-sight plane of the observer so as to appear superimposed on the images from the outside environment.

An example of a head-up display using a holographic combiner is that disclosed in GB-A-2149140. This comprises a holographic combiner, a projector unit effective to project light within a selected wavelength band onto the combiner, and an element which is interposed in the light path between the combiner and an observer's viewing position and which is transmissive only to light within the selected wavelength band.

Another example of a head-up display using a holographic element is described in ENGINEERING MATERIALS DESIGN, Vol. 31, No. 4, Page 15, April 1987. This example is similar to that described in GB-A-2149140 in that it makes use of a holographic reflector but differs in that the hologram is established using a laser.

The holographic combiner works on the principal of exposed recording media, namely utilizing the photosensitive layer. Recorded on the media is a matrix of exposed images of dots, or a grid of lines. Light incident upon the recorded images (i.e., the matrix or grid) is reflected by the holographic combiner. The light striking the holographic combiner between the recorded images passes through it undiffracted and unreflected. This implies that holographic combiners have less than absolute reflectivity. Further, light from the outside environment is filtered by the holographic combiner such as to reduce its transmission, due to the fact that the photosensitive layer is not perfectly transmissive. In effect, typical holographic combiners transmit between 70% and 80% efficiency, while reflecting projected images at between 70% and 80% efficiency.

Low transmissivity and reflectivity of the combiner is undesirable, especially in low visibility operating conditions such as at night or in inclement weather. Further, in flight simulator applications and the like it is crucial to keep the required brightness of images generated in the trainee's line-of-sight to a minimum in order to minimize the cost of operation and maximize the life-span of simulator image projection equipment.

It is known from EP-A-0154953 to use a cholesteric liquid crystal as an optical filter which is transmissive to desired wavelengths, for forming a notch filter structure.

Thus, there is a present need in the art for a combiner with higher transmissivity of images from the outside environment, simulator images, etc., and further with higher reflectivity of projected images such as instrumentation, etc., while maintaining the weight, complexity and cost of the optics to a minimum.

The present invention is directed to an HUD combiner that utilizes the properties of cholesteric liquid crystals to superimpose projected images upon images in the observer's line-of-sight. The combiner of the present invention thereby provides a high transmissivity of images in the line-of-sight plane of the observer, together with a high reflectivity of images projected upon it, not heretofore obtained.

According to a first aspect of the present invention, there is provided an apparatus for positioning images in an observer's line-of-sight, said images being projected from an image source within a predetermined range of wavelengths and reflected by a combiner element operating to combine the projected images with images in the line-of-sight of the observer, the combiner element comprising a cholesteric liquid crystal device reflective to light radiation within said predetermined wavelength range, and transmissive to light radiation at all other wavelengths.

According to a second aspect of the present invention, there is provided a method for positioning a images in an observer's line-of-sight, comprising the steps of positioning, in the line-of-sight of the observer, a cholesteric liquid crystal device reflective to light radiation with a first circular polarization within a predetermined range of wavelengths, transmissive to light radiation with a second circular polarization opposite said first circular polarization within said predetermined range of wavelengths, and transmissive to light radiation with either said first or second circular polarizations outside said predetermined range of wavelengths; and projecting from an image source an image within said predetermined range of wavelengths onto the cholesteric liquid crystal device for combination with an image in said line-of-sight of said observer, such that said projected image is reflected by the cholesteric liquid crystal device toward the observer and combined with said image in said line of sight of said observer.

According to a preferred embodiment of the present invention, a combiner for an HUD system is formed with two flat cholesteric liquid crystal elements, each reflective to light within a certain band-width having opposite rotary sense. A CRT and collimating optics are positioned to project images, representing instrument readings, for example, upon the combiner in such a way as to reflect the images to the observer. The combiner is placed in the line-of-sight of the observer so that images from the CRT, reflected into the line-of-sight of the observer, appear superimposed upon images from the outside environment, simulator, etc.

The combiner for an HUD system according to the present invention provides higher transmissivity of images from the outside environment, and higher reflectivity of projected images, such as instrumentation, than heretofore provided by the prior art. Further, weight, complexity of the components, and cost are reduced over the prior art.

The invention is described further hereinafter, by way of example only, with reference to the accompanying drawings, in which:
Fig. 1 illustrates a prior art HUD system with combiner;
Fig. 2 illustrates a HUD system according to one embodiment of the present invention utilizing dual cholesteric liquid crystal elements;
Fig. 3(a) illustrate the transmission characteristics of a cholesteric liquid crystal element reflective to RHCP green light;
Fig. 3(b) is a graph of transmission and polarization efficiency of a cholesteric liquid crystal element;
Fig. 4 illustrates an HUD system according to one embodiment of the present invention utilizing dual cholesteric liquid crystal elements and a half-wavelength filter;
Fig. 5 illustrates an HUD system according to another embodiment of the present invention utilizing a single cholesteric liquid crystal element and circular polarizing filter;
Fig. 6 is a graph illustrating the angular dependence of the wavelength of maximum reflection; and
Figs. 7(a) and 7(b) illustrate the biasing of the reflection angle from the cholesteric liquid crystal element through the use of surface tilt, untilted and tilted cases, respectively.

With reference to Fig. 2, a preferred embodiment of an HUD system 18, utilizing cholesteric liquid crystal combiner 20 according to the present invention, is shown. As illustrated, HUD system 18 includes combiner 20, together with an source 22, and collimating optics 24.

Combiner 20, in the preferred embodiment, comprises first and second cholesteric elements 26 and 28, respectively. First cholesteric liquid crystal element 26 is tuned to reflect right hand circular polarized (RHCP) light in a bandwidth, B, around 540 nm (i.e., green light), and second cholesteric liquid crystal element 28 is tuned to reflect left hand circular polarized (LHCP) light in that same bandwidth, B. That is, first cholesteric liquid crystal element 26 is reflective to images that are RHCP and in the bandwidth B, and transmissive to all other images, and second cholesteric liquid crystal element 28 is reflective to images that are LHCP and in the bandwidth B. Thus, reference to "an image" herein refers to light of a particular circular polarization and with a certain bandwidth. First and second cholesteric elements 26, 28 are, in one embodiment, separate elements, and positioned roughly parallel to one another. However, other embodiments of the present invention will have first and second cholesteric elements 26, 28 joined as one element, or oriented parallel to one another, dependent on the intended application.

Image source 22 may be a cathode ray tube (CRT), liquid crystal display (LCD), or other type of display. In general, image source 22 is capable of generating images of instrumentation, for example aircraft altitude, bearing, fuel reserve level, gun-sights, etc. Image source 22 is preferably a green CRT having a phosphor coating, P43 or P53 for example, with a narrow bandwidth of transmission centred around 540 nm. The brightness of image source 22 must be sufficient to be perceived by an observer, symbolised by an eye labelled 0, after reflection, but due to the high reflectivity of a combiner constructed according to the present invention, the brightness of image source 22 may be kept to a minimum.

Collimating optics 24 may consist of various lenses, etc., and will be arranged as a function of the relative positions of combiner 20, image surface 22, and observer 0. The effect of collimation is to focus the images from image source 22 at some distance in the line-of-sight plane of observer O. For aircraft HUD applications, a collimated focus between 12.192 m (40 feet) and infinity is preferred.

HUD system 18 is positioned in an aircraft cockpit, or similar location, such that combiner 20 lies between the outside environment and observer O, in the observer's line-of-sight. Collimating optics 24 are positioned between combiner 20 and image source 22. Image source 22 is positioned such that images generated thereby are incident on, and reflected by, combiner 20 into the line-of-sight plane of observer O.

To better enable a comprehensive understanding of the functioning of the present invention, a brief description of cholesteric liquid crystal elements may be beneficial.

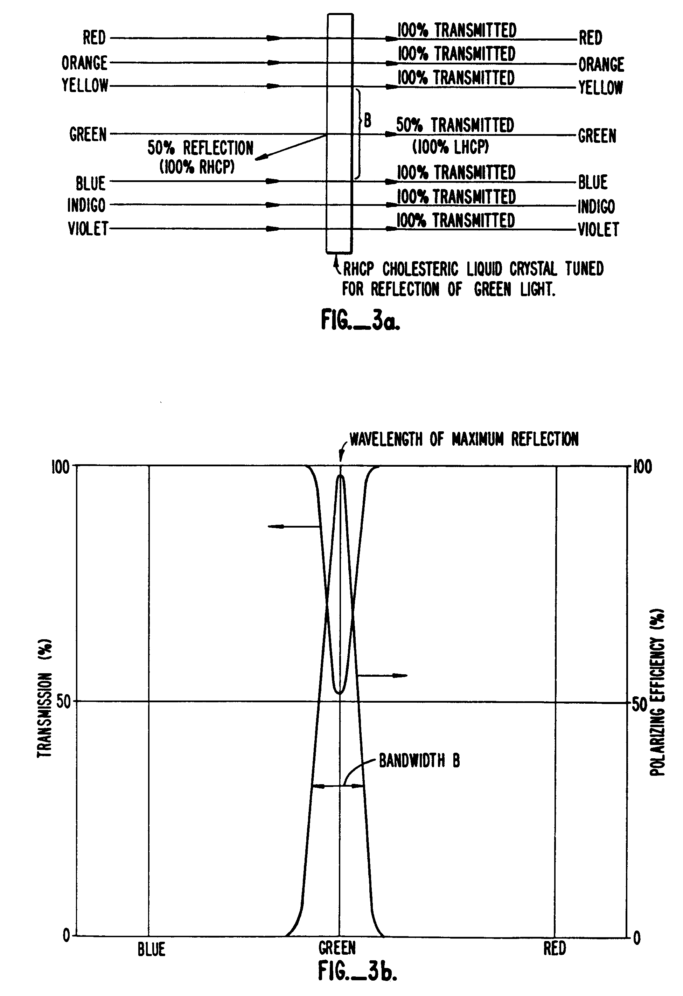

Cholesteric liquid crystals of the type employed in the present invention exhibit a number of unique properties with regard to light incident upon them. Specific to the present invention are several properties of such liquid crystals, explained with reference to Figs. 3(a) and 3(b). A cholesteric liquid crystal element (or cholesteric element) is substantially transparent to all wavelengths of electromagnetic radiation, specifically visible light, except that within a narrow bandwidth, B, around a selected primary wavelength, for example 540 nm (i.e., green), as shown in Fig. 3(a). Within bandwidth B, light of one rotary sense (LHCP or RHCP) incident upon the cholesteric element from either direction is reflected by the cholesteric element. By convention, a cholesteric element which is reflective to right-hand circular polarized light is said to be a right-hand circular polarized (or right-handed) cholesteric element. Conversely, a cholesteric liquid crystal element which is reflective to left-hand circular polarized light is said to be a left-hand circular polarized (or left-handed) cholesteric element. See Adams, et al., CHOLESTERIC FILMS AS OPTICAL FILTERS, "Journal of Applied Physics," Vol. 42, no. 10 (1971).

Further, light reflected by the cholesteric element maintains original rotary sense (i.e., does not change handedness). For example, RHCP light reflected by a cholesteric element is reflected as RHCP light. This is counter to the general case of other surfaces, where reflection is accompanied by a change of rotary sense (i.e., RHCP light incident upon a reflective surface is reflected as LHCP light).

The same is true with respect to transmission of light through a cholesteric element. Light of a first rotary sense passing through a cholesteric element maintains that first rotary sense. For example, RHCP light passing through a left-handed cholesteric element remains RHCP.

As Fig. 3(b) illustrates, cholesteric elements have very high transmissivity and reflectance around the primary wavelength. A cholesteric element is capable of achieving transmission of 90% for all light except that of one rotary sense within the bandwidth, B, around the primary wavelength, for which light the element is capable of 90% reflection. In HUD applications, this provides the observer with acute visibility of images of the outside environment, transmitted through the cholesteric element, combined with high-contrast projected symbology, reflected off the element.

Operation of HUD system 18 according to a preferred embodiment of the present invention will now be described with reference to Fig. 2. Observer O is positioned to receive images from the outside environment through combiner 20 located in the observer's forward field-of-view. Green light emitting from image source 22, of equal parts LHCP and RHCP, is collimated by collimating optics 24, and caused to be incident upon first cholesteric element 26. The RHCP portion of light incident upon first cholesteric element 26 is reflected into the line-of-sight of observer O, while the LHCP portion of the light is transmitted unattenuated by first cholesteric element 26 and caused to be incident upon second cholesteric element 28. The LHCP light incident upon second cholesteric element 28 is reflected into the line-of-sight plane of observer O by second cholesteric element 28, passing unattenuated through first cholesteric element 26.

All images from the outside environment in the line-of-sight of observer O not within bandwidth B are transmitted through first and second cholesteric elements 26, 28 to observer O. Those images within bandwidth B which are LHCP are reflected away from observer O by second cholesteric element 28, and those which are RHCP are reflected away from observer O by first cholesteric element 26.

Because cholesteric elements exhibit high transmissivity, better viewing of images of the outside environment is provided. Further, since cholesteric elements are reflective to light within a selected bandwidth incident upon them from either direction, images from the outside environment within the reflective bandwidth are reflected away from observer O. Thus, the projected images within the bandwidth B have a higher contrast as against images from the outside environment. Consequently, image source 22 need be of a lower power than that used in the prior art. This lowers the cost and complexity of HUD system 18.

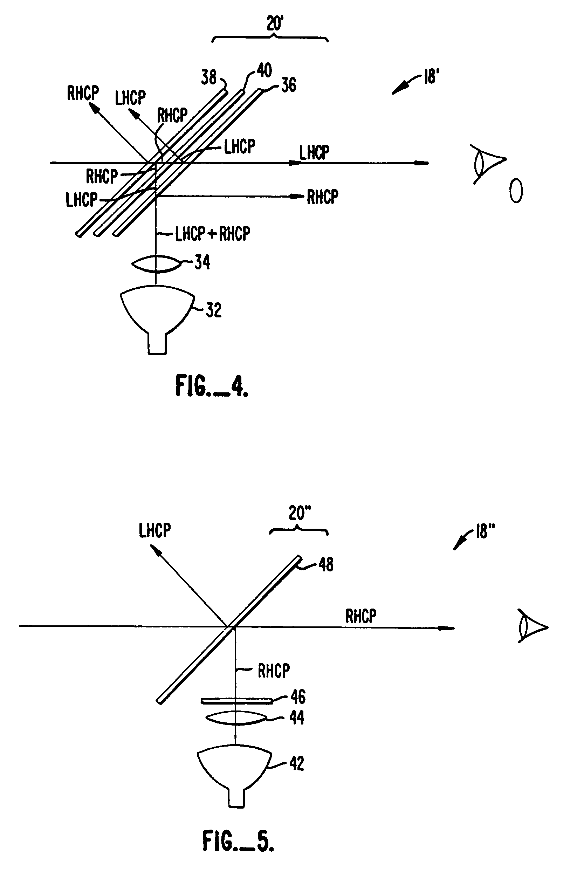

With reference to Fig. 4, another embodiment of the present invention is shown. In this embodiment, HUD system 18' consists of an image source 32, similar to that described above, collimating optics 34, again as described above, and combiner 20', comprising first and second cholesteric elements 36 and 38 respectively. Between first and second cholesteric elements 36, 38 is positioned half wavelength filter 40. First and second cholesteric elements 36, 38 are formed to be RHCP, both having a bandwidth, B, of reflection centered around 540 nm (green light). First and second cholesteric elements 36, 38, and half-wavelength filter 40 are positioned in the line-of-sight plane of observer O, and further in the path of incidence of image source 32.

In operation, green light emitting from image source 32, of equal parts LHCP and RHCP, is collimated by collimating optics 34 and caused to be incident upon first cholesteric element 36. RHCP light incident upon first cholesteric element 36 is reflected into the line-of-sight plane of observer O, while LHCP light is transmitted unattenuated by first cholesteric element 36 and caused to be incident upon half-wavelength filter 40. Light passing through half-wavelength filter 40 is caused to reverse its rotary sense (i.e., LHCP light is reversed to RHCP light). Light passing through quarter-wavelength filter 40 is caused to be incident upon second cholesteric element 38, which reflects the now RHCP light into the line-of-sight plane of observer O. Intermediate to reaching observer O, the light reflected by second cholesteric element 38 passes once more through half-wavelength filter 40, undergoing a second reversal of rotary sense (i.e., RHCP to LHCP), so as to pass unattenuated through first cholesteric element 36 to observer O.

Since the optical properties of a cholesteric element are directly dependent on the temperature of the cholesteric liquid crystal material, the embodiment as detailed above (Fig. 4) uses two identical cholesteric elements to minimize the effects of temperature shifts on the optical performance of the combiner. Properties such as the dependence of the reflected wavelength on the angle of incidence (further discussed below) can also be better controlled when identical cholesteric elements are used.

As detailed in Fig. 5, another embodiment of an HUD system 18'' according to the present invention has a combiner 20'' comprised of a single cholesteric element 48, tuned to reflect green RHCP light, and located in the line-of-sight plane of observer O. HUD system 18'' further comprises image source 42, collimating optics 44, and circular polarizing filter 46. This embodiment is most commonly used in situations where image source 42 is provided with a polarizing filter to reduce reflection from external light, such as sunlight.

In operation, light emitting from image source 42, which is RHCP, is collimated by collimating optics 44, and transmitted to cholesteric element 48 by circular polarizing filter 46. Light which is LHCP, on the other hand, is substantially entirely filtered out by circular polarizing filter 46. Thus, images projected upon cholesteric element 48 by image source 42 are predominantly RHCP, and consequently reflected by cholesteric element 48 so as to be combined with images passing through cholesteric element 48 from the outside environment.

Many changes in construction and other embodiments and applications are also possible. For example, the composition of the cholesteric combiner may be such that it has a bandwidth of maximum reflection centered at a wavelength other than 540 nm. Likewise, the bandwidth of maximum reflection around the primary wavelength may be varied as a function of the cholesteric liquid crystal's composition.

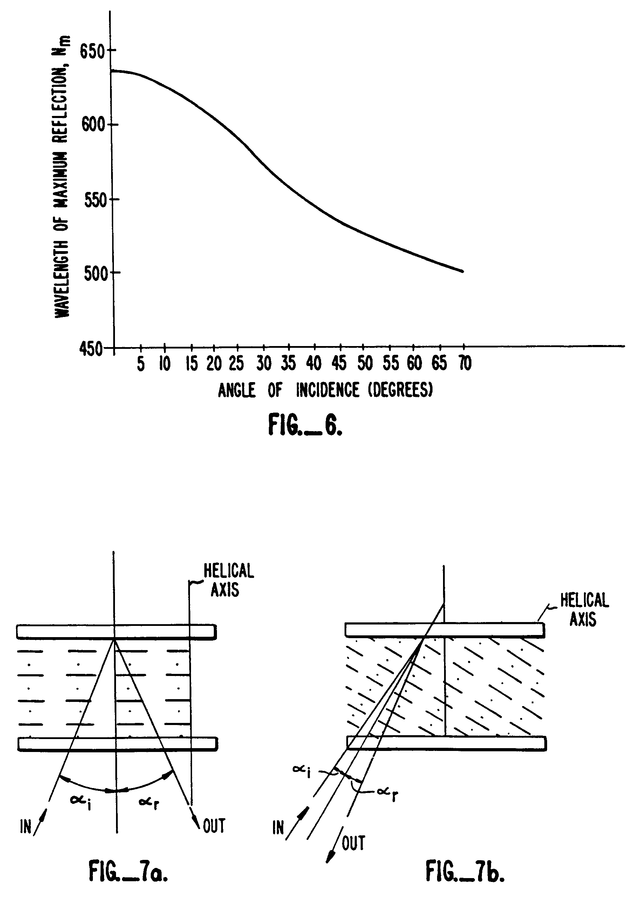

Further, the physical arrangement of components of the invention may be varied with specific results. For example, relying on another property of cholesteric elements, as demonstrated in Fig. 6, that the wavelength of maximum reflection is angular sensitive (i.e., as the angle of incidence increases, the wavelength of maximum reflection is shifted toward the shorter wavelengths) the wavelength of maximum reflection of the cholesteric liquid crystal element for normally incident light may be increased to compensate for the shift toward the shorter wavelengths of reflection for non-normally incident light.

Another property of cholesteric elements, demonstrated in Figs. 7(a) and 7(b), is that the separation between the angle of incidence αᵢ and angle of reflection αᵣ is a function of the orientation, or tilt, of the helical axis of the cholesteric layer. As the helical axis is tilted away from normal to the surface of the cholesteric liquid crystal element the separation becomes smaller. Thus, positioning of the reflected image in the line-of-sight of the observer may be controlled by the composition of the element (as opposed to positioning of the image source).

Thus, the disclosures and descriptions herein are purely illustrative, and are not intended to be in any sense limiting.

## Claims

1. An apparatus for positioning images in an observer's line-of-sight (O), said images being projected from an image source (22; 32; 42) within a predetermined range of wavelengths and reflected by a combiner element (20; 20'; 20'') operating to combine the projected images with images in the line-of-sight of the observer, characterised in that the combiner element comprises a cholesteric liquid crystal device reflective to light radiation within said predetermined wavelength range, and transmissive to light radiation at all other wavelengths.

2. An apparatus as claimed in claim 1, wherein the projected images are formed from light radiation having a first circular polarization, and the cholesteric liquid crystal device (20;26) operates to reflect light radiation of said first circular polarization, and is transmissive to light radiation having a second circular polarization different from the first circular polarization.

3. An apparatus as claimed in claim 1 or 2, further comprising means (24; 34; 44) receiving said images projected from said image source, and for collimating and projecting the collimated images to the combiner element.

4. An apparatus as claimed in claim 2, wherein the cholesteric liquid crystal device (20) comprises a first cholesteric liquid crystal element element (26), and a second cholesteric liquid crystal element (28) proximate said first cholesteric liquid crystal element (26) reflective to light radiation having said second circular polarization within said predetermined wavelength range and transmissive to light radiation having said first circular polarization within said predetermined wavelength range and to light radiation at any wavelength outside said predetermined wavelength range.

5. An apparatus as claimed in claim 1, wherein the cholesteric liquid crystal device comprises first and second cholesteric liquid crystal elements (36, 38) each reflective to light radiation of a first circular polarization within said predetermined wavelength range, and transmissive to light radiation of a second circular polarization different from the first circular polarization and a half wavelength plate (40) located between said first and second cholesteric liquid crystal elements (36, 38) reversing the circular polarization of light radiation forming a projected image transmitted therethrough.

6. A method for positioning images in an observer's line of sight (O), comprising the steps of positioning, in the line of sight of the observer, a cholesteric liquid crystal device (20) reflective to light radiation with a first circular polarization within a predetermined range of wavelengths, transmissive to light radiation with a second circular polarization opposite said first circular polarization within said predetermined range of wavelengths, and transmissive to light radiation with either said first or second circular polarizations outside said predetermined range of wavelengths; and projecting from an image source (22) an image within said predetermined range of wavelengths onto the cholesteric liquid crystal device (20) for combination with an image in said line of sight of said observer, such that said projected image is reflected by said cholesteric liquid crystal device (20) towards the observer and combined with said image in said line of sight of the observer.

7. A method for positioning images in an observer's line of sight as claimed in claim 6, wherein said cholesteric liquid crystal device (20) comprises a first cholesteric liquid crystal element (26), and including the steps of positioning, proximate said first cholesteric liquid crystal element (26), a second cholesteric liquid crystal element (28) having high reflectivity to light radiation within said predetermined range of wavelengths and having said second circular polarization and high transmissivity to light radiation within said predetermined range of wavelengths and having said first circular polarization and to light radiation outside said predetermined range of wavelengths.

8. A method for positioning images in an observer's line of sight as claimed in claim 6, wherein said cholesteric liquid crystal device (20) comprises a first cholesteric liquid crystal element (36), and including the steps of positioning, proximate said first cholesteric liquid crystal element (36), a second cholesteric liquid crystal element (38) having high reflectivity to light radiation within said predetermined range of wavelengths and having said first circular polarization and high transmissivity to light radiation within said predetermined range of wavelengths and having said second circular polarization and to light radiation outside said predetermined range of wavelengths, and positioning, between said first and second cholesteric liquid crystal elements (36,38), a half wavelength plate (40) for reversing the circular polarization of light radiation of a projected image transmitted therethrough.

## Patentansprüche

1. Vorrichtung zum Positionieren von Bildern in einer Blicklinie (O) eines Betrachters, wobei die Bilder von einer Bildquelle (22; 32; 42) innerhalb eines vorbestimmten Wellenlängenbereichs projiziert und von einem Kombinatorelement (20; 20'; 20'') reflektiert werden, das die projizierten Bilder mit Bildern in der Blicklinie des Betrachters kombiniert,
**dadurch gekennzeichnet,**
daß das Kombinatorelement eine cholesterische Flüssigkristalleinrichtung aufweist, die für Lichtstrahlung innerhalb des vorbestimmten Wellenlangenbereichs reflektierend und für Lichtstrahlung bei allen anderen wellenlangen durchlässig ist.

2. Vorrichtung nach Anspruch 1, dadurch gekennzeichnet, daß die projizierten Bilder von einer Lichtstrahlung gebildet sind, die eine erste Zirkularpolarisation aufweist, und daß die cholesterische Flüssigkristalleinrichtung (20; 26) eine Lichtstrahlung der ersten Zirkularpolarisation reflektiert und für eine Lichtstrahlung mit einer zweiten Zirkularpolarisation, die von der ersten Zirkularpolarisation verschieden ist, durchlässig ist.

3. Vorrichtung nach Anspruch 1 oder 2, dadurch gekennzeichnet, daß Mittel (24; 34; 44) zum Empfangen der von der Bildquelle projizierten Bilder und zur Kollimation und Projektion der parallel ausgerichteten Bilder zum Kombinationselement vorgesehen sind.

4. Vorrichtung nach Anspruch 2, dadurch gekennzeichnet, daß die cholesterische Flüssigkristalleinrichtung (20) ein erstes cholesterisches Flüssigkristallelement (26) umfaßt sowie ein zweites cholesterisches Flüssigkristallelement (28), das benachbart zum ersten cholesterischen Flüssigkristallelement (26) angeordnet und reflektierend ist für Lichtstrahlung, die die zweite Zirkularpolarisation innerhalb des vorbestimmten Wellenlängenbereichs aufweist, sowie durchlässig ist für Lichtstrahlung, die die erste Zirkularpolarisation innerhalb des vorbestimmten Wellenlängenbereiches aufweist, und für Lichtstrahlung mit irgendeiner Wellenlänge außerhalb des vorbestimmten Wellenlängenbereichs.

5. Vorrichtung nach Anspruch 1, dadurch gekennzeichnet, daß die cholesterische Flüssigkristalleinrichtung erste und zweite cholesterische Flüssigkristallelemente (36, 38) umfaßt, von denen jedes reflektierend ist für Lichtstrahlung einer ersten Zirkularpolarisation innerhalb des vorbestimmten Wellenlängenbereiches und durchlässig ist für Lichtstrahlung einer zweiten Zirkularpolarisation, die von der ersten Zirkularpolarisation unterschiedlich ist, und daß eine Halbwellenlängen-Platte (40) vorgesehen ist, die zwischen dem ersten und zweiten cholesterischen Flüssigkristallelement (36, 38) angeordnet ist und die Zirkularpolarisation der Lichtstrahlung umkehrt, die ein projiziertes Bild bildet, das durchgelassen wird.

6. Verfahren zur Positionierung von Bildern in einer Blicklinie (O) eines Betrachters, das die Schritte umfaßt: Positionieren einer cholesterischen Flüssigkristalleinrichtung (20) in der Blicklinie des Betrachters, wobei die cholesterische Flüssigkristalleinrichtung für Lichtstrahlung mit einer ersten Zirkularpolarisation innerhalb eines vorbestimmten Wellenlängenbereiches reflektierend ist, für Lichtstrahlung mit einer zweiten Zirkularpolarisation, die zur ersten Zirkularpolarisation innerhalb des vorbestimmten Wellenlängenbereiches entgegengesetzt ist, durchlässig ist und für Lichtstrahlung mit entweder der ersten oder zweiten Zirkularpolarisation außerhalb des vorbestimmten Wellenlängenbereiches durchlässig ist; und Projizieren eines Bildes von einer Bildquelle (22), das innerhalb des vorbestimmten Wellenlängenbereiches liegt, auf die cholesterische Flüssigkristalleinrichtung (20) zur Kombination mit einem Bild in der Blicklinie des Betrachters, so daß das projizierte Bild von der cholesterischen Flüssigkristalleinrichtung (20) in Richtung des Betrachters reflektiert und mit dem Bild in der Blicklinie des Betrachters kombiniert wird.

7. Verfahren zum Positionieren von Bildern in einer Blicklinie eines Betrachters nach Anspruch 6, dadurch gekennzeichnet, daß die cholesterische Flüssigkristalleinrichtung (20) ein erstes cholesterisches Flüssigkristallelement (26) aufweist, und das die Schritte enthält: Positionieren eines zweiten cholesterischen Flüssigkristallelements (28) in der Nähe des ersten cholesterischen Flüssigkristallelements (26), wobei das zweite cholesterische Flüssigkristallelement (28) eine hohe Reflexionsfähigkeit für Lichtstrahlung hat, die innerhalb des vorbestimmten Wellenlängenbereichs liegt und die zweite Zirkularpolarisation aufweist, und eine hohe Durchlässigkeit für Lichtstrahlung hat, die innerhalb des vorbestimmten Wellenlängenbereiches liegt und die erste Zirkularpolarisation aufweist, sowie für Lichtstrahlung außerhalb des vorbestimmten Wellenlängenbereichs.

8. Verfahren zum Positionieren von Bildern in einer Blicklinie eines Betrachters nach Anspruch 6, dadurch gekennzeichnet, daß die cholesterische Flüssigkristalleinrichtung (20) ein erstes cholesterisches Flüssigkristallelement (36) umfaßt, und das die Schritte enthält: Positionieren eines zweiten cholesterischen Flüssigkristallelements (38) in der Nähe des ersten cholesterischen Flüssigkristallelements (36), wobei das zweite cholesterische Flüssigkristallelement (38) eine hohe Reflexionsfähigkeit für Lichtstrahlung hat, die innerhalb des vorbestimmten Wellenlängenbereichs liegt und die erste Zirkularpolarisation aufweist, und eine hohe Durchlässigkeit für Lichtstrahlung hat, die innerhalb des vorbestimmten Wellenlängenbereichs liegt und die zweite Zirkularpolarisation aufweist, sowie für Lichtstrahlung, die außerhalb des vorbestimmten Wellenlängenbereiches liegt, und Positionieren einer Halbwellenlängen-Platte (40) zwischen dem ersten und zweiten cholesterischen Flüssigkristallelement (36, 38), um die Zirkularpolarisation der Lichtstrahlung eines projizierten, durchgelassenen Bildes umzukehren.

## Revendications

1. Appareil pour positionner des images dans une ligne de visée d'un observateur (O), lesdites images étant projetées à partir d'une source d'images (22 ; 32 ; 42) à l'intérieur d'une plage prédéterminée de longueurs d'onde et étant réfléchies par un élément mélangeur (20X ; 20' ; 20'') fonctionnant pour mélanger les images projetées avec des scènes dans la ligne de visée de l'observateur, l'élément mélangeur comprenant un dispositif à cristal liquide cholestérique réfléchissant le rayonnement lumineux compris dans ladite plage de longueurs d'onde prédéterminée, et transparent au rayonnement lumineux pour toutes les autres longueurs d'onde.

2. Appareil selon la revendication 1, dans lequel les images projetées sont formées à partir de rayonnement lumineux ayant une première polarisation circulaire, et le dispositif à cristal liquide cholestérique (20 ; 26) fonctionne pour réfléchir le rayonnement lumineux de ladite première polarisation circulaire, et est transparent au rayonnement lumineux ayant une seconde polarisation circulaire différente de la première polarisation circulaire.

3. Appareil selon la revendication 1 ou 2, comprenant, de plus, un moyen (24 ; 34 ; 44) pour recevoir lesdites images projetées depuis ladite source d'images, et pour collimater et projeter les imagés collimatées vers l'élément mélangeur.

4. Appareil selon la revendication 2, dans lequel le dispositif à cristal liquide cholestérique (20) est constitué d'un premier élément à cristal liquide cholestérique (26), et d'un second élément à cristal liquide cholestérique (28) à proximité dudit premier élément à cristal liquide cholestérique (26), réfléchissant le rayonnement lumineux, ayant ladite seconde polarisation circulaire, compris dans ladite plage prédéterminée de longueurs d'onde et transparent au rayonnement lumineux, ayant ladite première polarisation circulaire, compris dans ladite plage prédéterminée de longueurs d'onde et au rayonnement lumineux, de n'importe quelle longueur d'onde, en dehors de ladite plage prédéterminée de longueurs d'onde.

5. Appareil selon la revendication 1, dans lequel le dispositif à cristal liquide cholestérique comprend un premier et un second éléments à cristal liquide cholestérique (36, 38), chacun réfléchissant le rayonnement lumineux, d'une première polarisation circulaire, compris dans ladite plage prédéterminée de longueurs d'onde, et transparent au rayonnement lumineux, d'une seconde polarisation circulaire, différente de la première polarisation circulaire, et une plaque à demi-longueur d'onde (40), située entre lesdits premier et second éléments à cristal liquide cholestérique (36, 38), inversant la polarisation circulaire du rayonnement lumineux formant une image projetée transmise à travers.

6. Procédé pour positionner des images dans une ligne de visée d'un observateur (O), comprenant une étape de positionnement, dans la ligne de visée de l'observateur, d'un dispositif à cristal liquide cholestérique (20) réfléchissant le rayonnement lumineux, avec une première polarisation circulaire, compris dans une plage prédéterminée de longueurs d'onde, transparent au rayonnement lumineux, avec une seconde polarisation circulaire opposée à ladite première polarisation circulaire, compris dans ladite plage prédéterminée de longueurs d'onde, et transparent au rayonnement lumineux, avec l'une ou l'autre desdites première et seconde polarisations circulaires, en dehors de ladite plage prédéterminée de longueurs d'onde ; et comprenant une étape de projection, à partir d'une source d'images (22), d'une image comprise dans ladite plage prédéterminée de longueurs d'onde, sur le dispositif à cristal liquide cholestérique (20) pour la mélanger avec une scène dans ladite ligne de visée dudit observateur, de façon à ce que ladite image projetée soit réfléchie par le dispositif à cristal liquide cholestérique (20) vers l'observateur et mélangée avec ladite scène dans ladite la ligne de visée dudit observateur.

7. Procédé pour positionner des images dans une ligne de visée d'un observateur selon la revendication 6, dans lequel ledit dispositif à cristal liquide cholestérique (20) est constitué d'un premier élément à cristal liquide cholestérique (26), et comprenant une étape de positionnement, à proximité du premier élément à cristal liquide cholestérique (26), d'un second élément à cristal liquide cholestérique (28) ayant un pouvoir réfléchissant élevé au rayonnement lumineux compris dans ladite plage prédéterminée de longueurs d'onde et ayant ladite seconde polarisation circulaire et une transmissivité élevée au rayonnement lumineux compris dans ladite plage prédéterminée de longueurs d'onde et ayant ladite première polarisation circulaire, et au rayonnement lumineux en dehors de ladite plage prédéterminée de longueurs d'onde.

8. Procédé pour positionner des images dans une ligne de visée d'un observateur selon la revendication 6, dans lequel ledit dispositif à cristal liquide cholestérique (20) est constitué d'un premier élément à cristal liquide cholestérique (36), et comprenant une étape de positionnement, à proximité du premier élément à cristal liquide cholestérique (36), d'un second élément à cristal liquide cholestérique (38) ayant un pouvoir réfléchissant élevé au rayonnement lumineux compris dans ladite plage prédéterminée de longueurs d'onde et ayant ladite première polarisation circulaire et une transmissivité élevée au rayonnement lumineux compris dans ladite plage prédéterminée de longueurs d'onde et ayant ladite seconde polarisation circulaire, et au rayonnement lumineux en dehors de ladite plage prédéterminée de longueurs d'onde, et comprenant une étape de positionnement, entre lesdits premier et second éléments à cristal liquide cholestérique (36, 38), d'une plaque à demi-longueur d'onde (40) pour inverser la polarisation circulaire du rayonnement lumineux d'une image projetée transmise à travers.
